# FASCICULE DE BREVET EUROPEEN

(11) **EP 0 506 500 B1**
(45) Date de publication et mention de la délivrance du brevet: **12.06.1996**
(21) Numéro de dépôt: 92400567.1
(22) Date de dépôt: 04.03.1992
(51) Int. Cl.: F16H 19/08, F16H 21/52

(54) **Groupe convertisseur d'un mouvement circulaire en mouvement oscillant**
Vorrichtung zum Umwandeln einer drehenden Bewegung in eine oszillierende Bewegung
Device to convert rotary motion into oscillatory motion

(30) Priorité: 04.03.1991 ES 9100537
(43) Date de publication de la demande: 30.09.1992
(73) Titulaire: Ezpeleta Iturralde, D. Jose Javier, E-31007 Pamplona, (Navarra) (ES)
(72) Inventeur: Ezpeleta Iturralde, D. Jose Javier, E-31007 Pamplona, (Navarra) (ES)
(74) Mandataire: Hasenrader, Hubert

(56) Documents cités:
- GB-A- 283 242
- US-A- 1 590 536
- US-A- 2 118 955
- US-A- 2 971 387

## Description

Il existe une grande diversité de mécanismes et de machines tels que, par exemple, les machines agricoles épandeuses d'engrais, de grains de semence, etc., dans lesquelles on a besoin d'un mécanisme oscillant pour le déroulement de la fonction à réaliser alors que l'entraînement moteur dont on dispose est à mouvement rotatif continu, de sorte qu'il est nécessaire de disposer d'un groupe qui transforme le mouvement rotatif d'entraînement en un mouvement oscillant voulu.

Pour cette raison, on a déjà développé différentes solutions de groupes de transformation de mouvement visant cet objectif mais, soit ces groupes sont excessivement compliqués, soit ils n'offrent pas un fonctionnement réellement efficace, soit encore les éléments constitutifs sont soumis à des efforts et usures qui à leur tour se traduisent rapidement par des détériorations et des jeux qui sont à l'origine d'un fonctionnement défectueux.

Selon l'invention, pour éliminer tous ces inconvénients et problèmes, on propose un groupe de transformation du mouvement perfectionné possédant des caractéristiques constructives et fonctionnelles qui le rendent très avantageux comparativement à tous ceux qui étaient connus jusqu'à présent, ce groupe étant adaptable à n'importe quel type de machine ou de système mécanique où il est nécessaire de transformer un mouvement circulaire continu en un mouvement oscillant.

L'état de la technique est illustré par les documents US-A-1 590 536, GB-A-0 283 243 et US-A-2 971 387. US-A-1 590 536 dévoile un groupe de transformation de mouvement conforme au préambule de la revendication 1. Dans ce document, il est prévu que la pièce centrale et la pièce périphérique sont disposées dans un bain d'huile à l'intérieur d'un carter.

Le groupe de transformation selon la présente invention est caractérisé en ce que la pièce centrale est sphérique et la pièce périphérique est annulaire et en ce que, sur ses faces, la pièce annulaire est munie de joints respectifs qui établissent une fermeture entre elle-même et la pièce sphérique centrale, de sorte qu'il est possible d'enfermer une huile ou une graisse lubrifiante uniquement dans la cavité définie entre ces deux pièces.

On obtient ainsi un groupe de transformation de mouvement qui est d'une grande simplicité en réalisation structurale et en conception technique mais qui est en même temps d'une grande efficacité fonctionnelle et d'une grande efficacité de travail, avec le minimum d'effort incident et de frottement entre les éléments, et en apportant la possibilité de transmettre au moyen de ce groupe aussi bien le mouvement circulaire moteur que le mouvement oscillant transformé.

Tout ceci a pour effet que le groupe selon l'invention possède des caractéristiques effectivement très avantageuses qui lui confèrent une entité propre et un caractère préférentiel relativement aux dispositifs classiques destinés à la même fonction.

D'autres caractéristiques et avantages de l'invention seront mieux compris à la lecture de la description qui va suivre, d'une exemple de réalisation et en se référant aux dessins annexés sur lesquels :

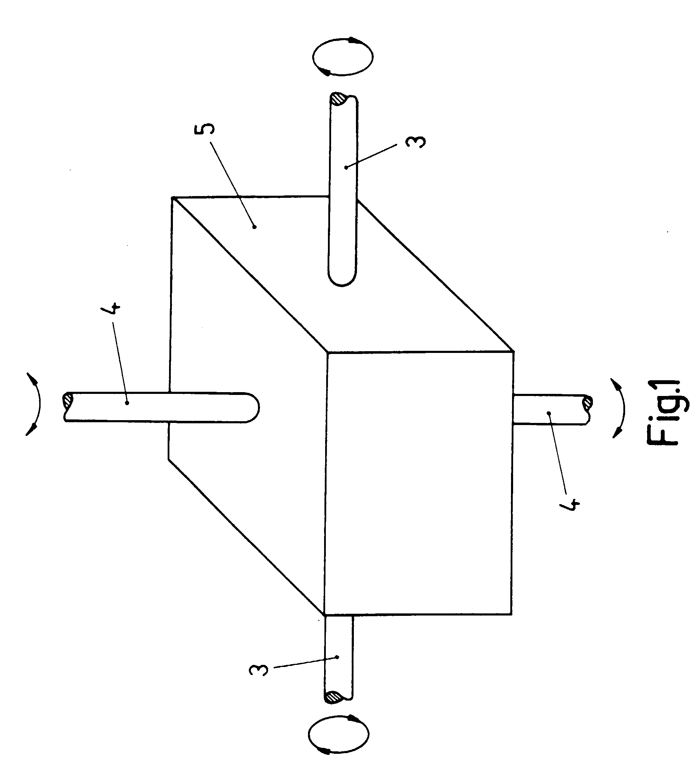

la figure 1 est une représentation schématique en perspective extérieure du carter qui contient le groupe de transformation de mouvement, sur laquelle on peut voir les extrémités des arbres perpendiculaires qui émergent de ce carter ;

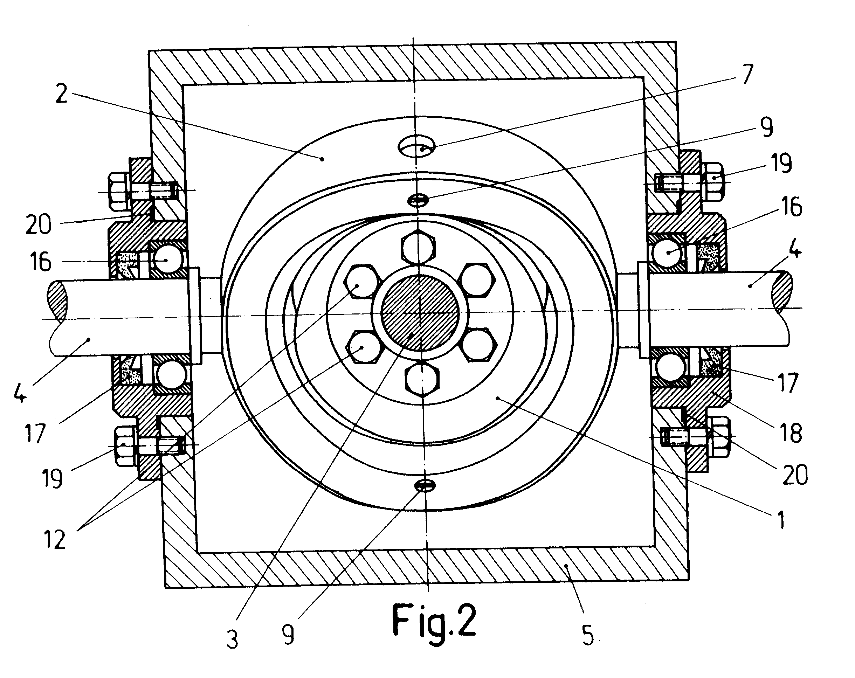

la figure 2 est une représentation de l'ensemble du groupe de transformation du mouvement, selon un plan frontal perpendiculaire à l'arbre moteur rotatif, le carter extérieur étant représenté en coupe ;

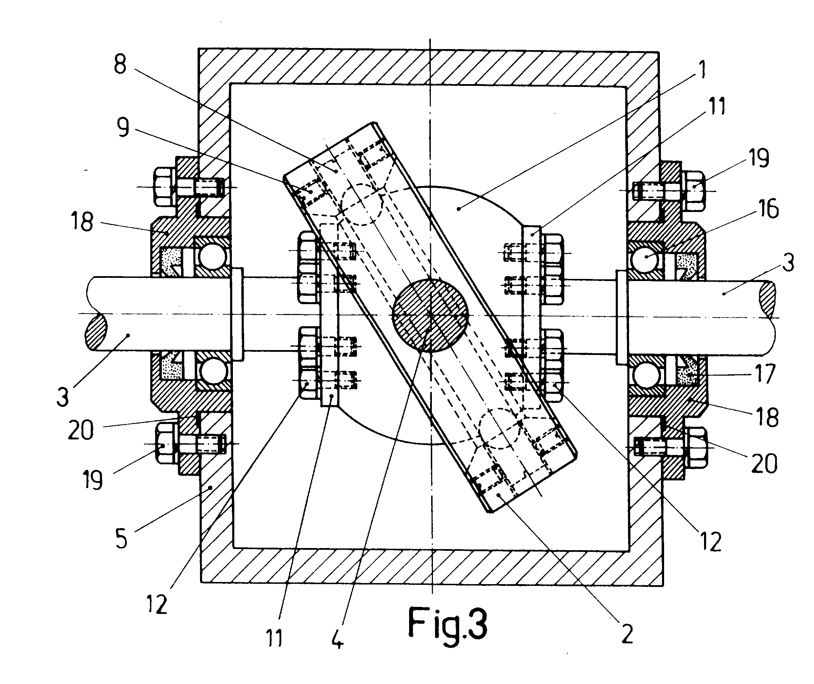

la figure 3 est une vue correspondante, de côté relativement à ladite précédente, sur laquelle le carter est aussi représenté en coupe ;
les figures 4 et 5 sont des vues correspondantes en élévation de côté et arrière de l'une des vis de fixation des tétons de la pièce annulaire ;
les figures 6 et 7 sont des vues correspondantes, en élévation latérale et avant de l'un desdits tétons de la pièce annulaire, dans une forme de réalisation possible de ce téton, qui comporte une tête sphérique ;
les figures 8 et 9 sont des vues analogues aux vues précédentes d'un téton muni d'une tête hémisphérique ;

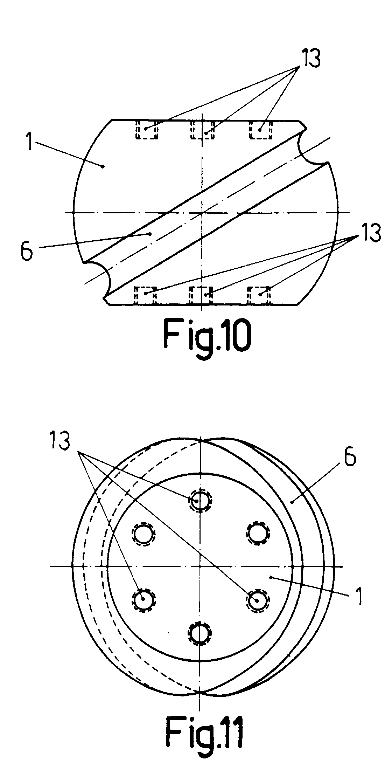

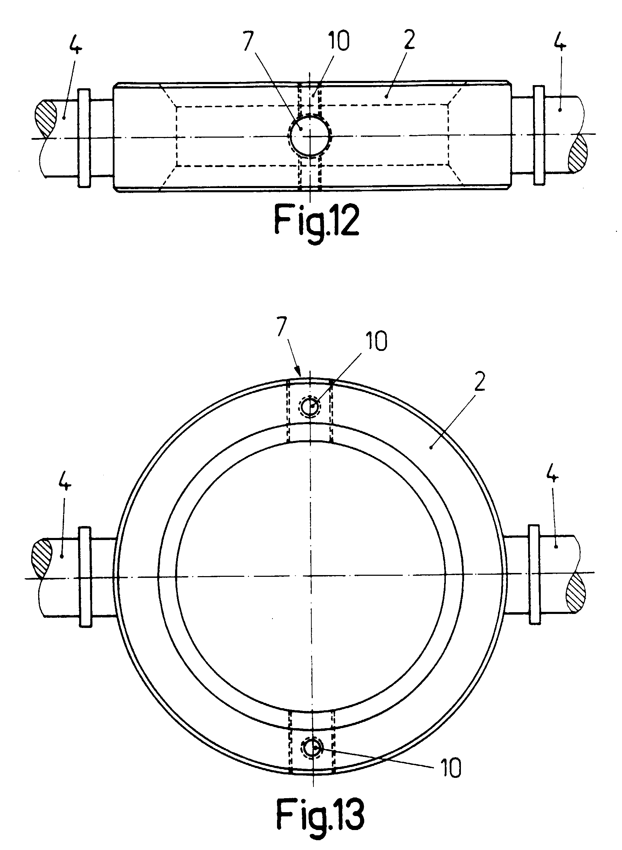

les figures 10 et 11 sont des vues correspondantes en élévation et en plan de la pièce sphérique rotative avec laquelle on réalise le mécanisme du groupe de transformation de mouvement ;
les figures 12 et 13 sont des vues correspondantes respectives, en élévation et en plan, de la pièce annulaire oscillante du mécanisme ;
la figure 14 est une représentation du mécanisme du groupe de transformation du mouvement sans carter extérieur selon l'invention, dans une réalisation dans laquelle la pièce annulaire est fermée latéralement par des joints de manière à enfermer l'huile lubrifiante dans son volume intérieur.

L'invention a pour objet un groupe adaptable à des machines et systèmes mécaniques, destiné à transformer un mouvement rotatif continu en un mouvement oscillant et qui, selon la forme de réalisation représentée, est essentiellement composé d'une pièce 1 de configuration sphérique et d'une autre pièce 2 de forme annulaire qui est disposée autour de la première, ces pièces 1 et 2 étant respectivement solidaires d'arbres 3 et 4 perpendiculaires entre eux dont les extrémités émergent d'un carter 5 dans lequel l'ensemble est contenu dans un bain d'huile.

La pièce sphérique 1 est une pièce massive qui peut être réalisée en acier, et qui présente sur sa surface extérieure une rainure circulaire périphérique 6 disposée avec une certaine inclinaison par rapport à l'arbre 3 correspondant auquel la pièce 1 est accouplée.

La pièce annulaire 2 présente de son côté des orifices radiaux 7 dans une direction perpendiculaire à l'arbre correspondant 4, et elle renferme dans ses orifices 7 des tétons 8 qui sont fixés dans une position déterminée par des vis prisonnières appropriées 9 contenues dans des orifices transversaux 10 respectifs, ou par n'importe quel autre système capable de permettre de fixer lesdits tétons 8, de telle manière que lesdits tétons 8 fassent saillie par leur extrémité vers l'intérieur de la pièce annulaire 2, en s'engageant par cette extrémité saillante dans la rainure extérieure 6 de la pièce 1, par rapport à laquelle ils conservent cependant une possibilité de coulissement.

Avec cette construction, si l'on imprime à l'arbre 3 de la pièce sphérique 1, par une de ses extrémités, une force motrice rotative, cette pièce 3 tourne en conséquence, en entraînant avec elle les tétons 8 de la pièce annulaire 2, lesquels, en glissant dans la rainure 6, entraînent la pièce annulaire 2 en mouvement oscillant alterné vers l'un et l'autre côté alternativement, mouvement par lequel l'arbre correspondant 4 est à son tour entraîné, de sorte que la rotation continue imprimée à l'arbre 3 se trouve transformée dans ledit deuxième arbre 4 en un mouvement de rotation partielle qui change alternativement dans un sens et dans l'autre.

Dans ces circonstances, il est possible de transmettre par l'extrémité de l'arbre 3 qui est à l'opposé à l'extrémité d'entraînement une rotation continue pour l'entraînement d'un autre mécanisme quelconque tandis que l'arbre 4 peut être raccordé par l'une quelconque de ses extrémités pour transmettre un entraînement oscillant à un mécanisme quelconque dont on a besoin.

Ainsi qu'il est évident, l'arbre 3 de la pièce sphérique 1 peut adopter diverses solutions pratiques, sans sortir du principe de l'ensemble ; par exemple, il peut être intégré en une seule pièce avec ladite pièce sphérique 1 ou encore il peut former une pièce indépendante mais unique, qui traverse cette pièce sphérique 1 à laquelle il est alors accouplé à l'aide d'une clavette à l'aide d'un segment polygonal ou cannelé, ou encore, comme dans la réalisation représentée, cet arbre peut être composé de deux segments indépendants munis d'un plateau 11 en forme de disque à leur extrémité, et fixés par cette extrémité, et à l'aide de vis 12, à des trous filetés 13 correspondants pratiqués dans des méplats opposés de la pièce 1.

De même, l'arbre 4 de la pièce annulaire 2 peut être réalisé en une seule pièce avec ladite pièce annulaire 2 ou encore il peut être composé de deux segments indépendants qui sont fixés à cette pièce 2 de la même façon que l'arbre 3 est fixé à la pièce sphérique 1.

La rainure 6 de la pièce sphérique 1 peut être réalisée selon différentes inclinaisons par rapport à l'arbre 3, en modifiant de cette façon l'angle de travail de la mobilité de l'entraînement oscillant de la pièce annulaire 2, de sorte que, par variation de l'inclinaison selon laquelle cette rainure 6 est pratiquée, on peut faire varier l'angle du mouvement oscillant transformé obtenu avec le dispositif, pour l'adapter au mécanisme qu'il s'agit d'entraîner.

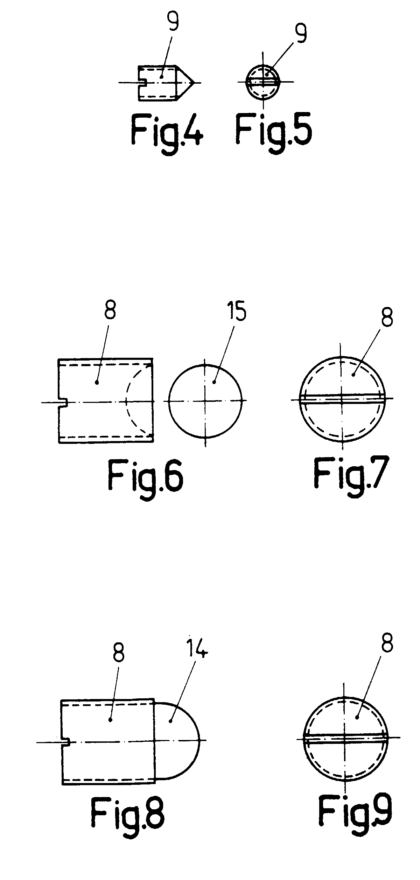

Pour faire en sorte que le coulissement des tétons 8 dans la rainure 6 se produise avec le minimum de frottement, cette rainure 6 est formée avec un fond semi-circulaire et, à leur tour, les tétons 8 sont formés avec une tête d'extrémité de forme correspondante de sorte que les tétons peuvent être formés avec une pointe hémisphérique 14, comme dans l'exemple représenté sur la figure 8 ou encore avec une extrémité creuse formant une cavité hémisphérique et munis d'une bille 15 dans cette cavité, comme dans l'exemple représenté sur la figure 6, cette dernière solution permettant d'obtenir un glissement de roulement, le frottement étant évidemment réduit à sa plus simple expression.

Toutefois, d'un autre côté, pour éviter dans tous les cas les détériorations dues au frottement, l'ensemble peut être enfermé ainsi qu'on l'a dit plus haut dans un bain d'huile à l'intérieur d'un carter enveloppant 5, de sorte qu'on obtient une lubrification constante ; le carter 5 est muni de plaques de fermeture appropriées amovibles pour permettre de monter les éléments dans la cavité intérieure et d'y avoir accès lorsqu'on en a besoin.

Pour que, conformément à ce qui a été dit, le carter 5 reste fermé avec une efficacité absolue, sans laisser fuir l'huile lubrifiante de l'intérieur, les arbres 3 et 4 traversent les parois du carter à l'aide de roulements 16 correspondants et de joints 17 appropriés qui sont fixés les uns et les autres à l'aide d'un couvercle 18 qui se fixe au carter 5 à l'aide de vis 19, en interposant dans la portée du couvercle un joint 20 qui assure dans l'étanchéité.

Cette disposition du bain d'huile dans le carter 5 n'est cependant pas couverte par les revendications.

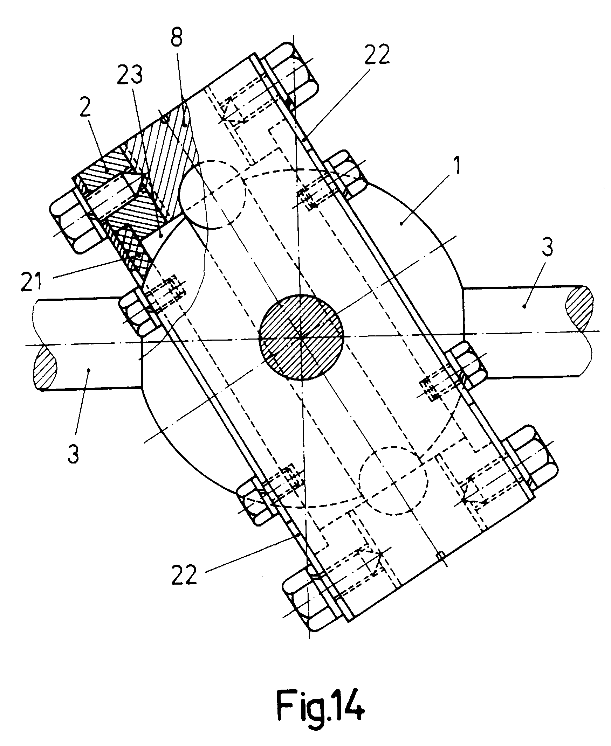

Selon l'invention, on prévoit une autre solution conforme à la réalisation représentée sur la figure 14, dans laquelle la pièce annulaire 2 se referme sur ses deux faces, contre la pièce sphérique 1, à l'aide de joints 21, fixés à l'aide de couvercles vissés 22 appropriés, de sorte que l'huile ou graisse de lubrification est uniquement contenue dans la cavité intérieure 23 de la pièce annulaire 2, soit sous la forme d'un graissage à vie, soit par introduction de l'huile ou de la graisse à l'aide d'une pompe de graissage à travers des graisseurs appropriés, qui sont prévus dans ce cas dans la pièce annulaire 2 précitée, sans qu'il soit nécessaire que le carter 5 soit plein d'huile, pourvu que les roulements 16, ou les coussinets par lesquels ils peuvent être remplacés, soient eux aussi munis d'un graissage à vie ou pourvu qu'on puisse y introduire cette graisse à l'aide d'une pompe de graissage.

Bien entendu, diverses modifications pourront être apportées par l'homme de l'art au dispositif qui vient d'être décrit uniquement à titre d'exemple non limitatif sans sortir du cadre de l'invention, dont l'objet est défini par les revendications.

## Revendications

1. Groupe pour transformer le mouvement circulaire d'un premier arbre (3) en un mouvement oscillant sur un deuxième arbre (4) perpendiculaire audit premier arbre (3), comportant une pièce centrale (1) solidaire du premier arbre (3) et une pièce périphérique (2) entourant ladite pièce centrale (1) et solidaire du deuxième arbre (4), ladite pièce centrale (1) présentant une rainure (6) périphérique extérieure circulaire inclinée par rapport au premier arbre (3), tandis que ladite pièce périphérique (2) comporte des tétons (8)montés radialement dans cette pièce (2) dans une direction perpendiculaire audit deuxième arbre (4) et dont les extrémités font saillie à l'intérieur en s'engageant libres en translation de coulissement dans ladite rainure (6) de manière que l'entraînement en rotation de ladite pièce centrale (1) à l'aide dudit premier arbre (3) provoque un mouvement d'oscillation rotatif alternatif de ladite pièce périphérique (2) et dudit deuxième arbre (4), caractérisé en ce que la pièce centrale (1) est sphérique et la pièce périphérique (20) est annulaire et en ce que, sur ses faces, la pièce annulaire (2) est munie de joints (21) respectifs qui établissent une fermeture entre elle-même et la pièce sphérique centrale (1), de sorte qu'il est possible d'enfermer une huile ou une graisse lubrifiante uniquement dans la cavité définie entre ces deux pièces (1, 2).

2. Groupe selon la revendication 1, caractérisé en ce que les tétons (8) de la pièce annulaire (2) sont munis d'une tête hémisphérique sur leur extrémité d'engagement dans la rainure (6) de la pièce sphérique (1), pour faciliter le glissement, cette tête étant définie par une simple arrondi (14) de la pointe de la pièce constitutive desdits tétons (8), ou par une bille (15) indépendante, emprisonnée dans une cavité frontale hémisphérique respective de cette extrémité des tétons (8).

3. Groupe selon l'une des revendications 1 ou 2, caractérisé en ce que le premier arbre (3) est formé en une seule unité de construction avec la pièce sphérique (1) ou formé d'une pièce indépendante qui passe à travers ladite pièce sphérique (1), ou encore réalisé en deux segments individuels qui sont convenablement fixés à ladite pièce sphérique (1).

4. Groupe selon l'une des revendications 1 à 3, caractérisé en ce que le deuxième arbre (4) est composé de deux segments radiaux solidaires en construction de la pièce annulaire (2) ou encore composé de deux segments indépendants convenablement fixés à ladite pièce.

## Patentansprüche

1. Vorrichtung zum Umwandeln der drehenden Bewegung einer ersten Welle (3) in eine oszillierende Bewegung einer zur ersten Welle (3) senkrechten zweiten Welle (4), mit einem an der ersten Welle (3) befestigten Zentralkörper (1) und einem den Zentralkörper (1) umgebenden und an der zweiten Welle (4) befestigten Peripheriekörper (2), wobei der Zentralkörper (1) eine in bezug auf die erste Welle (3) schräge, kreisförmige äußere Umfangsnut aufweist, während der Peripheriekörper (2) in bezug auf diesen Peripheriekörper (2) radial, in einer zur zweiten Welle (4) rechtwinkligen Richtung angeordnete Zapfen (8) aufweist, deren Enden nach innen vorspringen und frei translatorisch gleitend in die Nut (6) derart eingreifen, daß das Drehantreiben des Zentralkörpers (1) mittels der ersten Welle (3) eine drehend hin- und hergehende Oszillationsbewegung des Peripheriekörpers (2) und der zweiten Welle (4) bewirkt, dadurch gekennzeichnet, daß der Zentralkörper (1) sphärisch ist und der Peripheriekörper (2) ringförmig ist und daß der ringförmige Körper (2) an seinen Stirnflächen jeweils mit Dichtungen (21) versehen ist, die zwischen ihm und dem sphärischen Zentralkörper (1) derart abschließen, daß es möglich ist, ein Öl oder Schmierfett ausschließlich in dem zwischen den beiden Körpern (1,2,) ausgebildeten Hohlraum einzuschließen.

2. Vorrichtung nach Anspruch 1, dadurch gekennzeichnet, daß die Zapfen (8) des ringförmigen Körpers (2) an ihrem in die Nut (6) des sphärischen Körpers (1) eingreifenden Ende einen halbkugelförmigen Kopf haben, um das Gleiten zu erleichtern, wobei dieser Kopf von einer einfachen Abrundung (14) der Spitze des die Zapfen (8) darstellenden Bauteils gebildet ist, oder durch eine unabhängige Kugel (15) die in einem stirnseitigen, halbkugelförmigen Hohlraum an diesem Ende der Zapfen (8) gehalten ist.

3. Vorrichtung nach einem der Ansprüche 1 oder 2, dadurch gekennzeichnet, daß die erste Welle (3) mit dem sphärischen Bauteil (1) einstückig oder von einem unabghängigen Werkstück gebildet ist, das sich durch das sphärische Bauteil (1) hindurcherstreckt, oder aus zwei einzelnen Abschnitten hergestellt ist, die entsprechend an dem sphärischen Bauteil (1) befestigt sind.

4. Vorrichtung nach einem der Ansprüche 1 bis 3, dadurch gekennzeichent, daß die zweite Welle (4) zwei radiale Abschnitte aufweist, die mit dem ringförmigen Bauteil (2) einstückig gestaltet oder unabhängig von diesem hergestellt und entsprechend an ihm befestigt sind.

## Claims

1. Unit for converting the rotary motion of a first shaft (3) into oscillatory motion by a second shaft (4) perpendicular to the said first shaft (3), comprising a central piece (1) integral with the first shaft (3) and a peripheral piece (2) surrounding the said central piece (1) and integral with the second shaft (4), the said central piece (1) having a circular outer peripheral groove (6) inclined relative to the first shaft (3), while the said peripheral piece (2) comprises pins (8) mounted radially in this piece (2) in a direction perpendicular to the said second shaft (4) and the ends of which project into the interior engaging freely in sliding translation in the said groove (6) so that when the said central piece (1) is driven in rotation with the aid of the said first shaft (3), this results in reciprocating rotary oscillatory motion by the said peripheral piece (2) and by the said second shaft (4), characterised in that the central piece (1) is spherical and the peripheral piece (2) is annular and in that the faces of the annular piece (2) are provided with respective seals (21) which establish closure between it and the spherical central piece (1) so that a lubricating oil or grease can be contained solely within the cavity defined between these two pieces (1, 2).

2. Unit according to claim 1, characterised in that the pins (8) of the annular piece (2) are provided with a hemispherical head at their ends engaging in the groove (6) of the spherical piece (1) in order to facilitate sliding, this head being defined by a simple rounded portion (14) of the point of the piece forming the said pins (8) or by an independent ball (15) held in respective front hemispherical cavities at these ends of the pins (8).

3. Unit according to either of claims 1 or 2, characterised in that the first shaft (3) is made in one piece with the spherical piece (1) or is formed as an independent piece traversing the said spherical piece (1) or is produced as two individual segments fixed in an appropriate manner to the said spherical piece (1).

4. Unit according to one of claims 1 to 3, characterised in that the second shaft (4) is composed of two radial segments integral with the annular piece (2) or is composed of two independent segments fixed in an appropriate manner to the said piece.
